(19) Europäisches Patentamt
European Patent Office
Office européen des brevets

(11) Publication number: **0 092 343**
**A1**

(12) **EUROPEAN PATENT APPLICATION**

(21) Application number: 83301937.5

(22) Date of filing: 06.04.83

(51) Int. Cl.³: C 09 B 45/16
// D06P1/10

(30) Priority: 16.04.82 FR 8206561

(43) Date of publication of application: 26.10.83
Bulletin 83/43

(84) Designated Contracting States: BE CH DE FR GB IT LI NL

(71) Applicant: I.C.I. FRANCOLOR S.A., 8 Avenue Reaumur
Boîte Postale 207, F-92142 Clamart Cedex (FR)

(72) Inventor: Ficht, Paulette, 4 Rue du Cotentin,
F-76130 Mont Saint Aignan (FR)

(74) Representative: Ricks, Michael James et al, Imperial Chemical Industries PLC Legal Department: Patents
Thames House North Millbank, London SW1P 4QG (GB)

(54) **New chromium complex dyestuffs, their preparation and use.**

(57) The invention relates to asymmetric 1/2 chromium complexes.

The complexes according to the invention are of the general formula:

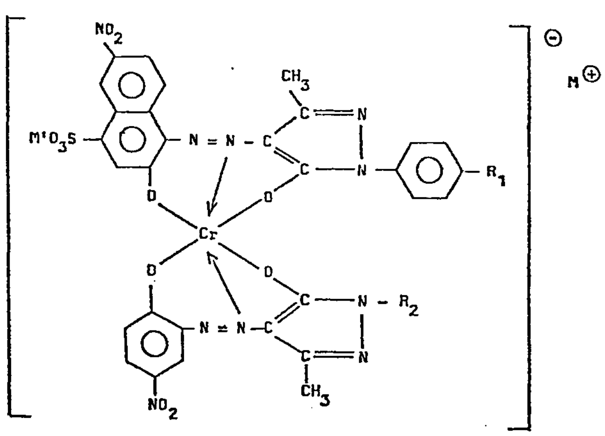

in which M and M′ are the same or different and each represent a hydrogen atom or one equivalent of a colourless cation, $R_1$ represents a hydrogen atom or a methyl radical and $R_2$ represents a phenyl, p-tolyl, o-, m- or p-chlorophenyl or dichloro-2,5-phenyl radical.

These complexes are useful for the dyeing or printing of nitrogenous organic substrates and wood in red shades.

EP 0 092 343 A1

0092343

NEW CHROMIUM COMPLEX DYESTUFFS; THEIR PREPARATION AND USE

This invention relates to new assymetric 1/2 chromium complexes and mixtures thereof, their preparation and their application as red dyestuffs, particularly for dyeing and printing nitrogeneous organic substrates and wood.

The chromium complexes according to the invention are of the following general formula:

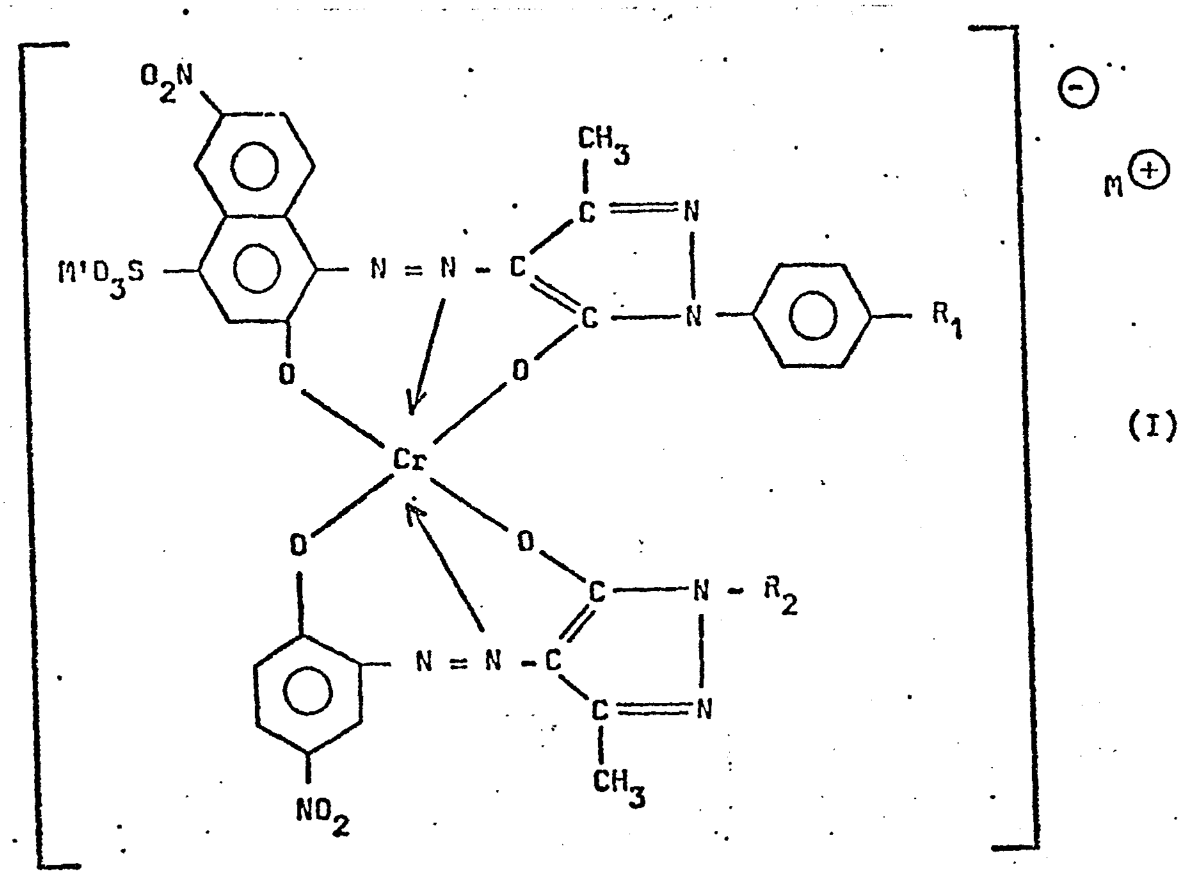

(I)

in which M and M' are the same or different and each represent a hydrogen atom or one equivalent of a colourless cation, $R_1$ represents a hydrogen atom or a methyl radical, and $R_2$ represents a phenyl, p-tolyl, o-, m- or p-chlorophenyl or 2,5-dichlorophenyl radical.

The 1/2 chromium complexes of the invention can be obtained from monoazo dyestuffs of the following formulae:

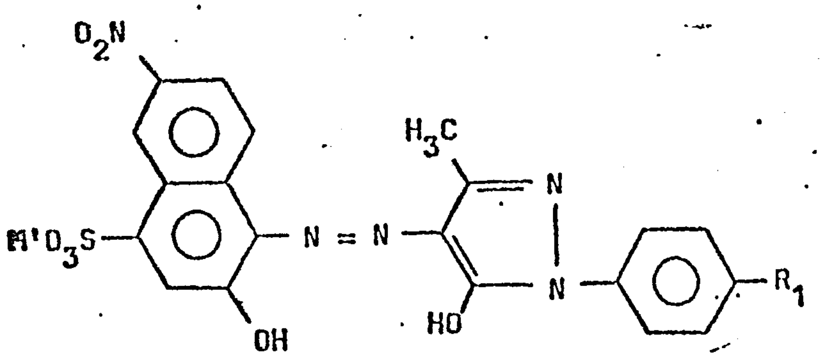

(II)

and

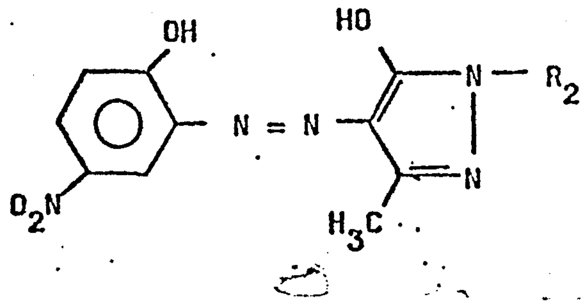

(III)

where M', $R_1$ and $R_2$ have the same meanings as above. The 1/2 chromium complexes can be obtained from the monoazo dyestuffs by a known process which consists of reacting one of the monoazo dyestuffs, preferably that of formula (II), with a trivalent chromium salt in order to convert it into a 1/1 chromium complex, and then condensing this 1/1 complex with the other monoazo dyestuff.

The monoazo dyestuffs of formulae (II) and (III) may be obtained in a known way by coupling the diazo derivative of 1-amino-2-hydroxy-6-nitronaphthalene-4-sulphonic acid or 4-nitro-2-aminophenol with the corresponding pyrazolone.

The preparation of the 1/1 chromium complex may be performed in accordance with known methods. To prepare the 1/1 chromium complex of a sulphonated monoazo dyestuff of formula (II), the dyestuff, in an acidic aqueous medium or in an organic solvent, is contacted with a

trivalent chromium salt such as, for example, basic chromium sulphate, chromium fluoride, chromium chloride or chromium formate, at a temperature between 100 and 145°C. If it is the non-sulphonated monoazo dyestuff of formula (III) which is to be converted into a 1/1 chromium complex, this reaction conveniently takes place in an organic solvent in the presence of a trivalent chromium salt, in particular chromic chloride, at a temperature between 100 and 130°C. Suitable organic solvents are polyols (e.g. ethylene glycol, diethylene glycol, propylene glycol) and their mono and diethers.

The condensation reaction between the 1/1 chromium complex and the other monoazo dyestuff may take place in water, in an organic solvent (e.g. alcohols, polyols or dimethylformamide) or in a mixture of water and organic solvent, at a pH between 4 and 9 and a temperature between 50 and 110°C. It is preferred to operate with a molar ratio of chromium complex to monoazo dyestuff of from 1 to 1.05.

The asymmetric 1/2 chromium complexes thus obtained are conveniently isolated as salts, particularly as alkaline salts (especially sodium, potassium or ammonium salts) or as salts of organic amines (e.g. ethanolamines). The chromium complexes of the invention may be made available in the form of a powder, in granular form or as a solution. They are suitable for dyeing and printing a wide range of substances, such as wool, silk, leather, synthetic polyamide or polyurethane fibres and wood, substances on which they are easy to use and give good dyeing performances.

The complexes according to the invention and mixtures of them are suitable for dyeing in a slightly alkaline bath, a neutral bath or a slightly acid bath, e.g. in an acetic acid bath. The dyes thus produced are very uniform with good light fastness, wash fastness, and good resistance to fulling, ageing and heat.

The following Examples, in which the percentages are by weight and the temperatures in degrees Centigrade, serve to illustrate the invention.

Example 1

A 1/1 chromium complex was prepared from the monoazo dyestuff produced by coupling the diazo derivative of 6-nitro-1-amino-2-naphthol-4-sulphonic acid and 1-phenyl-3-methyl-5-pyrazolone. 0.1 Mol of the 1/1 chromium complex was suspended in 0.6 litre of water and there was added 0.098 mol of the monoazo dyestuff (in paste form) obtained by coupling the diazo derivative of 4-nitro-2-aminophenol with 1-phenyl-3-methyl-5-pyrazolone. The volume of suspension thus produced was approx. 750ml.

The suspension was heated to 95-100°C and its pH was regulated between 6.5 and 8 by adding dilute sodium carbonate. This temperature was maintained until the dye starting materials could no longer be detected by thin film chromatography, and the pH was then adjusted to 9-9.5 by the addition of dilute sodium carbonate

The reaction mixture was cooled to 90°C and 150g of sodium chloride were added. After stirring for 30 minutes, the precipitate that formed was filtered at 75-80°C and dried. The mixed chromium complex thus obtained had the following formula:

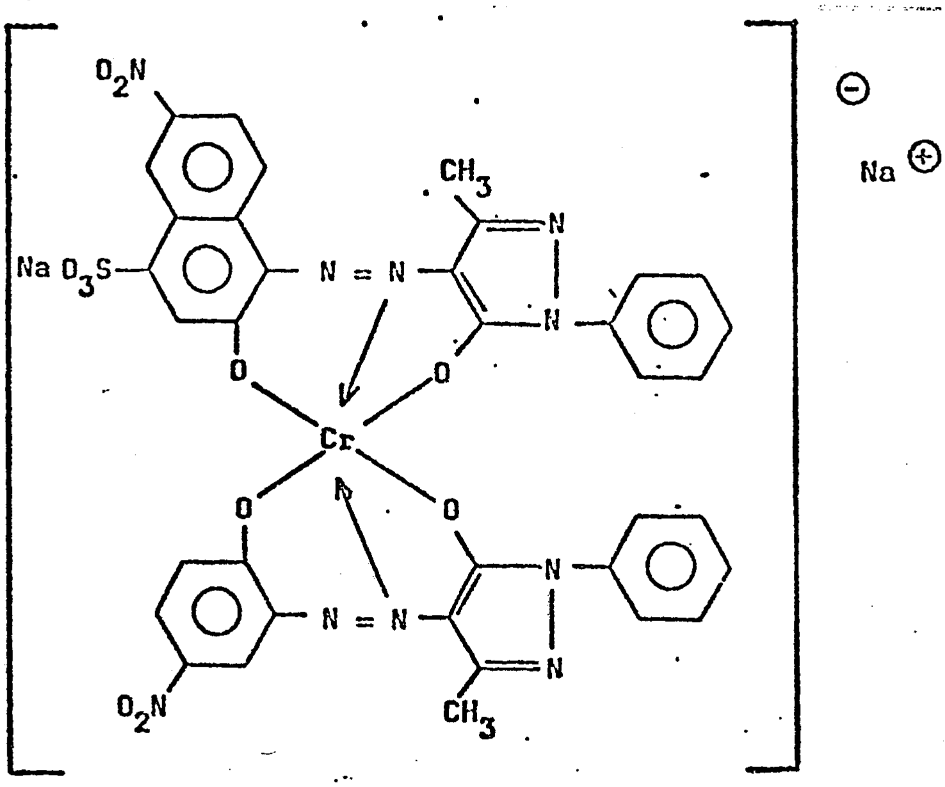

and was in the form of a dark brown powder which disssolved in water giving a reddish shade. The product dyed wool and polyamide in a slightly acid bath to give a red shade with good light fastness and resistance to moisture.

Example 2

5g Of a skein or piece of material of previously wetted wool or polyamide was introduced into a dyebath at 40-50°C containing 150ml water, 0.25g ammonium sulphate, 0.05g of a levelling agent (blend of $C_{16}$ to $C_{18}$ fatty amines ethoxylated with 14 to 30 mol. ethylene oxide) and 0.05g of the 1/2 complex obtained in Example 1. The pH was adjusted to 5 by means of acetic acid, then the mixture was heated for 45 minutes to boiling and maintained there for 45 minutes. Then the skein or piece of fabric was rinsed and dried.

The red shade of colour obtained had good fastness properties especially in respect of light and wetness.

Example 3

To print a tubular knitted fabric or bundles of textured polyamide filaments intended for the tufted carpet sector, a padding bath was prepared to impregnate the background and an overprinting paste of the following compositions:

Padding bath

| | |
|---|---|
| 1/2 complex dyestuff from Example 1 | 1 g/l |
| Thickener, 2.5%, derived from guar | 100 g/l |
| Fatty amido alcohol (condensate of copra oil and diethylene amine) | 4 g/l |
| Antifoaming agent (ethyl-hexyl alcohol) | 1 g/l |
| 80% formic acid | 5 g/l |
| Water at 40°C | to make up 1 l. |

Overprinting paste

| | |
|---|---|
| 1/2 complex dyestuff from Example 1 | 8 g |
| Thiodiglycol | 20 g |
| Urea | 20 g |
| Water at 40-50°C | 523 g |
| Thickener, 2.5%, derived from guar | 400 g |
| Fatty amido alcohol | 8 g |
| 80% formic acid | 20 g |
| Ethyl-hexyl alcohol | 1 g |
| | 1 kg |

First the material was padded in the bath and then the paste was overprinted. Without intermediate drying, it was evaporated for 5 minutes at 102-103°C. It was then rinsed, soaped at 40° in the presence of 1 to 2 g/l of an emulsion of an anionic surface-active agent of the alkylbenzene sulphonate type and perchlorethylene, rinsed again and dried.

The following Examples of assymetric 1/2 chromium complexes which may be prepared are also illustrative of the invention. The percentages are by weight and the temperatures in degrees Centigrade.

Example 4

0.1 Mol of the 1/1 chromium complex described in Example 1 is suspended in 0.6 litre of water and there is added 0.098 mol of the monoazo dyestuff (in paste form) obtained by coupling the diazo derivative of 4-nitro-2-aminophenol with 1-p-tolyl-3-methyl-5-pyrazolone. The volume of suspension thus produced is approximately 800ml.

The suspension is heated to 95-100°C and its pH is regulated to 7. This temperature is maintained until the dye starting materials can no longer be detected by thin film chromatography, and the pH is then adjusted to 8.5 by the addition of dilute sodium carbonate

The reaction mixture is cooled to 90°C and 150g of sodium chloride are added. After stirring for 30 minutes, the precipitate that forms is filtered at 80°C and dried. The mixed chromium complex thus obtained is in the form of a dark brown powder which dyes wool to give a red shade with very good general fastness properties.

Examples 5 to 14

By operating as in the previous Examples with the monoazo dyestuffs (II) and (III) indicated below, other 1/2 complexes according to the invention may be prepared which dye wool and polyamide to red shades with similar properties.

Example 5

Monoazodyestuff of formula (II):

4-[2-hydroxy-6-nitro-4-sulpho-1-azonaphthyl]-5-hydroxy-3-methyl-1-phenylpyrazole.

Monoazodyestuff of formula (III):
5-hydroxy-4-(2-hydroxy-5-nitrophenylazo)-3-methyl-1-(2-chlorophenyl) pyrazole.

Example 6

Monoazodyestuff of formula (II):
4-[2-hydroxy-6-nitro-4-sulpho-1-azonaphthyl]-5-hydroxy-3-methyl-1-phenylpyrazole.

Monoazodyestuff of formula (III):
5-hydroxy-4-(2-hydroxy-5-nitrophenylazo)-3-methyl-1-(3-chlorophenyl) pyrazole.

Example 7

Monoazodyestuff of formula (II):
4-[2-hydroxy-6-nitro-4-sulpho-1-azonaphthyl]-5-hydroxy-3-methyl-1-phenylpyrazole.

Monoazodyestuff of formula (III):
5-hydroxy-4-(2-hydroxy-5-nitrophenylazo)-3-methyl-1-(2,5-dichlorophenyl)pyrazole.

Example 8

Monoazodyestuff of formula (II):
4-[2-hydroxy-6-nitro-4-sulpho-1-azonaphthyl]-5-hydroxy-3-methyl-1-phenylpyrazole.

Monoazodyestuff of formula (III):
5-hydroxy-4-(2-hydroxy-5-nitrophenylazo)-3-methyl-1-(4-chlorophenyl)-pyrazole.

Example 9

Monoazodyestuff of formula (II):
4-[2-hydroxy-6-nitro-4-sulpho-1-azonaphthyl]-5-hydroxy-3-methyl-1-p-tolylpyrazole.

Monoazodyestuff of formula (III):
5-hydroxy-4-(2-hydroxy-5-nitrophenylazo)-3-methyl-1-(4-chlorophenyl)-pyrazole.

Example 10

Monoazodyestuff of formula (II):
4-[2-hydroxy-6-nitro-4-sulpho-1-azonaphthyl]-5-hydroxy-3-methyl-1-p-tolylpyrazole.

Monoazodyestuff of formula (III):
5-hydroxy-4-(2-hydroxy-5-nitrophenylazo)-3-methyl-1-(3-chlorophenyl)-pyrazole.

Example 11

Monoazodyestuff of formula (II):
4-[2-hydroxy-6-nitro-4-sulpho-1-azonaphthyl]-5-hydroxy-3-methyl-1-*p*-tolylpyrazole.

Monoazodyestuff of formula (III):
5-hydroxy-4-(2-hydroxy-5-nitrophenylazo)-3-methyl-1-(2-chlorophenyl)-pyrazole.

Example 12

Monoazodyestuff of formula (II):
4-[2-hydroxy-6-nitro-4-sulpho-1-azonaphthyl]-5-hydroxy-3-methyl-1-*p*-tolylpyrazole.

Monoazodyestuff of formula (III):
5-hydroxy-4-(2-hydroxy-5-nitrophenylazo)-3-methyl-1-(2,5-dichlorophenyl)-pyrazole.

Example 13

Monoazodyestuff of formula (II):
4-[2-hydroxy-6-nitro-4-sulpho-1-azonaphthyl]-5-hydroxy-3-methyl-1-*p*-tolylpyrazole.

Monoazodyestuff of formula (III):
5-hydroxy-4-(2-hydroxy-5-nitrophenylazo)-3-methyl-1-*p*-tolylpyrazole.

Example 14

Monoazodyestuff of formula (II):
4-[2-hydroxy-6-nitro-4-sulpho-1-azonaphthyl]-5-hydroxy-3-methyl-1-*p*-tolylpyrazole.

Monoazodyestuff of formula (III):
5-hydroxy-4-(2-hydroxy-5-nitrophenylazo)-3-methyl-1-phenylpyrazole.

CLAIMS

1. 1/2 asymmetric chromium complexes of general formula:

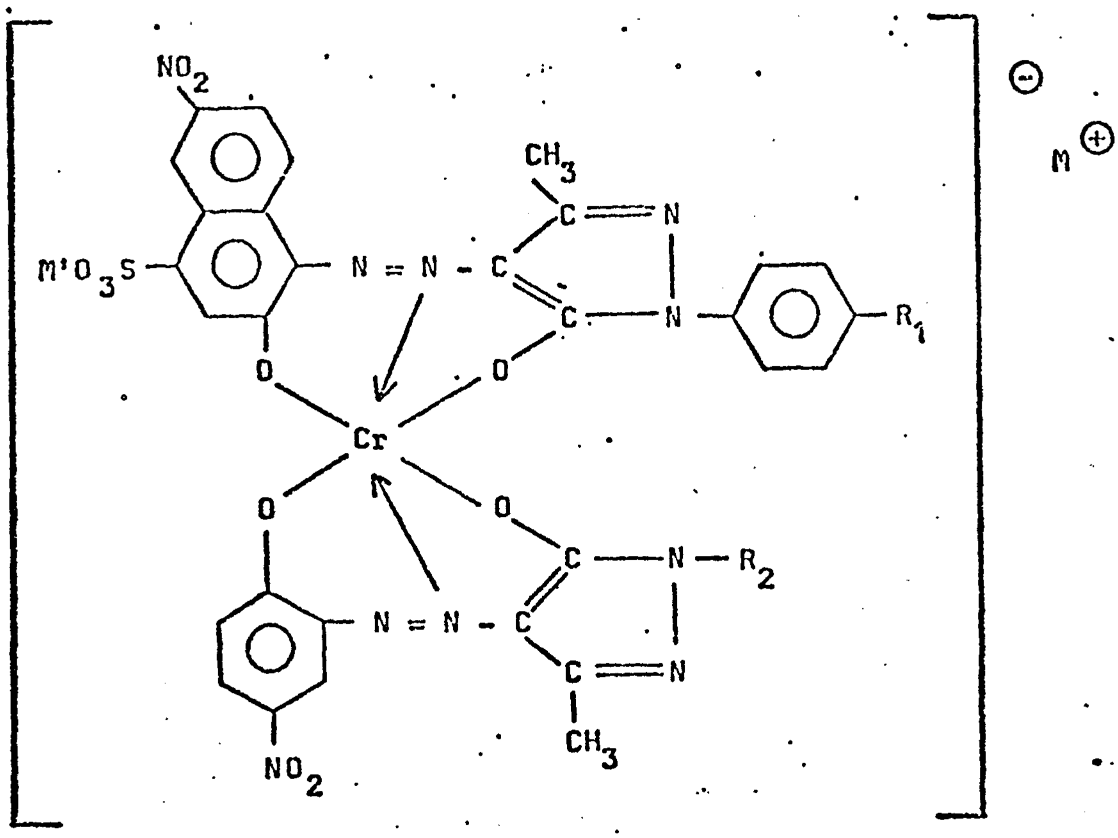

in which M and M' are the same or different and each represent a hydrogen atom or one equivalent of a colourless cation, $R_1$ represents a hydrogen atom or a methyl radical, and $R_2$ represents a phenyl, p-tolyl, o-, m- or p-chlorophenyl or 2,5-dichlorophenyl radical.

2. Complexes according to claim 1, in which $R_1$ is a hydrogen atom and $R_2$ is a phenyl radical.

3. Process for the preparation of complexes according to claim 1, characterised in that the 1/1 chromium complex of a monoazo dyestuff of the following formula (II):

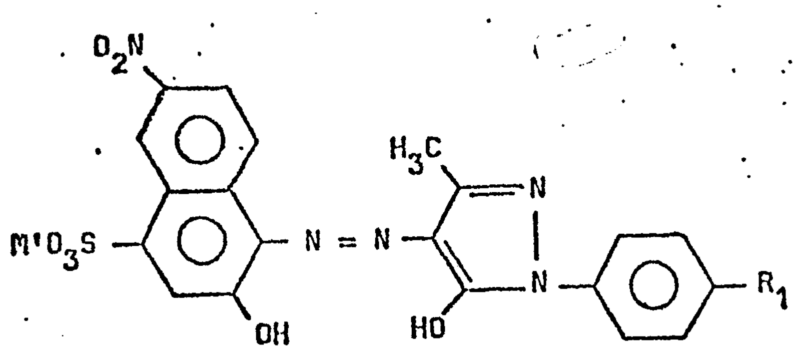

(II)

is condensed with a monoazo dyestuff of the formula (III):

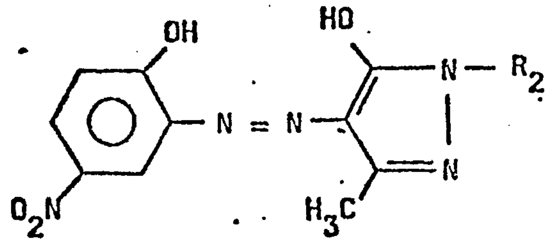

(III)

or, inversely, a monoazo dyestuff of formula (II) is condensed with the 1/1 chromium complex of a monoazo dyestuff of formula (III).

4. Use of the complexes according to claim 1 or 2 to colour natural or synthetic organic substrates.

5. Natural or synthetic organic substrates coloured by means of a complex according to claim 1 or 2.

0092343

European Patent Office

# EUROPEAN SEARCH REPORT

Application number

EP 83 30 1937

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. 3) |
| Y | DE-B-1 259 482 (BASF) * Column 1, paragraph 1; column 2, paragraph 1; column 4, examples 2 and 3 * | 1,3-5 | C 09 B 45/16 // D 06 P 1/10 |
| Y | FR-A-1 101 955 (CIBA) * Page 1, left-hand column, paragraphs 1 and 2; page 2, left-hand column, lines 23,24 and 41, right-hand column lines 8,13 and 14 * | 1,3-5 | |
| Y | FR-A-2 322 179 (SANDOZ) * Pages 1 and 2, formula I; page 17, examples 28 to 39 * | 1,3-5 | |
| | ----- | | TECHNICAL FIELDS SEARCHED (Int. Cl. 3) |
| | | | C 09 B 45/00 |

The present search report has been drawn up for all claims

| Place of search | Date of completion of the search | Examiner |
|---|---|---|
| THE HAGUE | 28-07-1983 | GREEN C.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82